# EUROPÄISCHE PATENTSCHRIFT

(11) **EP 4 205 899 B1**
(45) Veröffentlichungstag und Bekanntmachung des Hinweises auf die Patenterteilung: **01.04.2026**
(21) Anmeldenummer: 22217067.2
(22) Anmeldetag: 29.12.2022
(51) Int. Cl.: B23Q 11/00, B23Q 17/24, B27D 5/00, B27M 1/08, F16P 3/12

(54) **VORRICHTUNG ZUM BEARBEITEN VON, INSBESONDERE PLATTENFÖRMIGEN, WERKSTÜCKEN AUS HOLZ ODER HOLZERSATZSTOFFEN SOWIE VERFAHREN ZUM BETRIEB EINER SOLCHEN VORRICHTUNG**
DEVICE FOR MACHINING, IN PARTICULAR PANEL-SHAPED, WORKPIECES MADE OF WOOD OR WOOD SUBSTITUTES AND METHOD FOR OPERATING SUCH A DEVICE
DISPOSITIF POUR USINER DES PIÈCES EN BOIS OU EN BOIS EN FORME DE PLAQUE ET PROCÉDÉ POUR FAIRE FONCTIONNER UN TEL DISPOSITIF

(30) Priorität: 03.01.2022 DE 102022100050
(43) Veröffentlichungstag der Anmeldung: 05.07.2023
(73) Patentinhaber: IMA Schelling Deutschland GmbH, 32312 Lübbecke (DE)
(72) Erfinder: Flick, Thorsten, 49324 Melle (DE); Koob, Stefan, 31603 Diepenau (DE)
(74) Vertreter: Schober, Mirko

(56) Entgegenhaltungen:
- EP-A1- 2 628 993
- EP-A1- 2 777 902
- DE-A1- 10 251 584
- DE-U1- 202015 004 517

## Beschreibung

Die Erfindung betrifft eine Vorrichtung zum Bearbeiten von, insbesondere plattenförmigen, Werkstücken aus Holz oder Holzersatzstoffen sowie ein Verfahren zum Betrieb einer solchen Vorrichtung.

Eine gattungsgemäße Vorrichtung ist aus EP 2 777 902 A1 bekannt. Bei solchen Vorrichtungen wird ein Werkstück im Durchlauf durch eine Bearbeitungsvorrichtung geführt und über eine Rückführstrecke wieder zurückgeführt. Zwischen der Bearbeitungsvorrichtung und der Rückführstrecke befindet sich ein sogenannter Sicherheitsbereich, der bei der bekannten Vorrichtung allerdings nicht betreten werden kann. Sicherheitsbereiche sind solche Bereiche, die von Personen nicht ohne weiteres betreten werden dürfen, weil insoweit die Gefahr besteht, dass die betreffende Person beim Betreten des Sicherheitsbereichs aufgrund der Werkstückbewegung verletzt wird. Entsprechende Normen sehen daher vor, Scher- und Quetschstellen zu vermeiden, die beispielsweise dadurch entstehen, dass in der Bearbeitungsvorrichtung Werkstücke zwangsgeführt sind und auch Zurückführungen diverser Teile der Maschine zum Manipulieren der Lage der Werkstücke vorgesehen sind. Deshalb werden auch Schutzeinrichtungen gefordert, die eine Person vor Verletzungen schützt, wenn sie den Sicherheitsbereich betritt. Diese Schutzeinrichtungen wirken in erster Linie so, dass die komplette Vorrichtung sofort gestoppt wird, wenn eine Person den Sicherheitsbereich betritt. Im einfachsten Fall kann dies z. B. durch einen Lichtvorhang gelöst werden, der das Eintreten in den Sicherheitsbereich an die Maschinensteuerung weiterleitet.

Es kann allerdings erforderlich sein, dass eine Person bei einzelnen Werkstücken den Sicherheitsbereich betreten muss, weil die Werkstücke eine Geometrie aufweisen, die aufgrund ihrer Form oder Masse nicht mechanisch durch Unterstützungsrollen geführt werden können, sondern teilweise durch die Person, die die betreffende Maschine bedient, während des Bearbeitungsprozesses in der Bearbeitungsvorrichtung manuell mitgeführt werden. Für entsprechende Situationen sieht die bestehende Norm allerdings kein Sicherheitskonzept vor.

Aufgabe der vorliegenden Erfindung ist es daher, eine Vorrichtung der eingangs genannten Art und ein Verfahren zum Betrieb einer solche Vorrichtung anzugeben, durch die das Betreten eines Sicherheitsbereichs durch eine Person zur Unterstützung eines zu bearbeitenden Werkstücks möglich ist.

Gelöst wird diese Aufgabe durch eine Vorrichtung zum Bearbeiten von, insbesondere plattenförmigen, Werkstücken aus Holz oder Holzersatzstoffen mit den Merkmalen des Anspruchs 1 und durch ein Verfahren zum Betrieb einer solchen Vorrichtung mit den Merkmalen des Anspruchs 6. Vorteilhafte Ausführungsformen finden sich in den Unteransprüchen.

Die Erfindung geht von dem Gedanken aus, durch geschickte Konfiguration einer Schutzeinrichtung im Einzelfall das Betreten des Sicherheitsbereiches zu ermöglichen, ohne dass die erfindungsgemäße Bearbeitungsvorrichtung zum Stillstand gelangt. Dazu sieht die Erfindung eine Vorrichtung zum Bearbeiten von, insbesondere plattenförmigen, Werkstücken aus Holz oder Holzersatzstoffen vor. Diese weist eine im Durchlauf betriebene Bearbeitungsvorrichtung auf, welche wenigstens ein Bearbeitungsaggregat und eine Fördervorrichtung aufweist, die die Werkstücke in einer ersten Förderrichtung durch die Bearbeitungsvorrichtung bewegt.

Ferner verfügt die erfindungsgemäße Vorrichtung über eine Rückführstrecke, die die durch die Bearbeitungsvorrichtung bewegten Teile in wenigstens einer zweiten Förderrichtung bewegt. Diese zweite Förderrichtung kann insbesondere wenigstens abschnittweise entgegengesetzt zur ersten Förderrichtung verlaufen. Die Rückführstrecke kann beispielsweise dazu dienen, von einer Seite durch die Bearbeitungsvorrichtung bearbeitete Werkstücke zur Bearbeitung einer zweiten Schmalseite wieder in die Bearbeitungsvorrichtung zurückzuführen. Natürlich können die entsprechenden Werkstücke auch ausgeschleust werden.

Zudem umfasst die erfindungsgemäße Vorrichtung einen von der Bearbeitungsvorrichtung und der Rückführstrecke umgebenen Sicherheitsbereich. Dieser verfügt im Bereich eines Eingangs desselben über eine Schutzeinrichtung, die so angeordnet und ausgelegt ist, dass sie das Eintreten einer Person in den Sicherheitsbereich erkennt und an eine Steuereinrichtung der Vorrichtung ein entsprechendes Eintrittserkennungssignal übermittelt. Auf der Grundlage des Eintrittserkennungssignals kann die Erfindung gemäß Vorrichtung beispielsweise im Normalbetrieb ausgeschaltet werden.

Erfindungsgemäß umfasst die Schutzeinrichtung eine erste Sensoreinrichtung und eine davon in einer ersten Förderrichtung beabstandet angeordnete zweite Sensoreinrichtung. Durch diese beabstandeten Sensoreinrichtungen ist es möglich, nicht nur das Eintreten einer Person in den Sicherheitsbereich zu erfassen, sondern aufgrund der zeitlichen Abfolge von den Sensoreinrichtungen erzeugten Signalen auch festzustellen, ob eine Person in den Sicherheitsbereich eintritt oder diesen verlässt.

Zur Verwirklichung der vorliegenden Erfindung kommen unterschiedliche Sensoreinrichtungen in Betracht. So kann die erste und/oder die zweite Sensoreinrichtung eine nicht trennende Schutzeinrichtung umfassen, die aus folgender Gruppe ausgewählt ist: Berührungslos wirkende Schutzeinrichtung, Lichtvorhang, Trittmatte, druckempfindliche Schutzeinrichtung, Kontaktleiste. Kontaktmatte, Schaltleiste, Schaltmatte, Sicherheitsleiste. Als nicht trennende Schutzeinrichtung wird eine Einrichtung verstanden, die grundsätzlich den Sicherheitsbereich vom Außenbereich der Vorrichtung nicht so abtrennt, dass ein Betreten des Sicherheitsbereiches verhindert wird.

Bevorzugt ist vorgesehen, dass die erfindungsgemäße Vorrichtung eine Werkstückerkennungseinrichtung aufweist, die ein in die Bearbeitungsvorrichtung einlaufendes Werkstück erfasst. Auf diese Weise ist der Maschinensteuerung stets bekannt, ob sich ein zu bearbeitendes Werkstück in der erfindungsgemäßen Bearbeitungsvorrichtung befindet oder nicht.

Bevorzugt verfügt die Vorrichtung über eine Umschalteinrichtung, die dazu ausgelegt ist, die Vorrichtung zwischen einem Standardmodus, in welchem das Betreten des Sicherheitsbereichs durch eine Person automatisch zum Stillstand der Bearbeitungsvorrichtung führt, und einem Sondermodus umzuschalten. In diesem Sondermodus ist das Betreten des Sicherheitsbereichs durch eine Person ohne automatischen Stillstand der Bearbeitungsvorrichtung ermöglicht. Das Umschalten kann dabei manuell von einer Person außerhalb des Sicherheitsbereichs oder durch die Steuereinrichtung der Maschine auf der Grundlage eines entsprechend vorgegebenen Kriteriums vorgenommen werden.

Nach einer bevorzugten Ausführungsform kann ferner vorgesehen sein, dass die erfindungsgemäße Vorrichtung eine Abschalteinrichtung zum Abschalten der Vorrichtung aufweist, die vom Sicherheitsbereich aus für eine sich darin aufhaltende Person erreichbar ist. Auf diese Weise kann die Person, die zulässigerweise in den Sicherheitsbereich eingetreten ist, bei eventuell auftretenden Schwierigkeiten oder Gefahren die Vorrichtung dennoch zum Stillstand bringen. Dies erhöht insgesamt noch die Sicherheit.

Weiterhin ist die Erfindung auf ein Verfahren zum Betrieb einer oben beschriebenen Vorrichtung gerichtet. Bei diesem Verfahren wird die Vorrichtung in einem Standardmodus betrieben, in welchem Werkstücke nacheinander über die Fördervorrichtung in die Bearbeitungsvorrichtung eingefördert, dort bearbeitet und über die Rückführstrecke zurückgeführt oder/und aus der Vorrichtung nach der durch die Bearbeitungsvorrichtung erfolgte Bearbeitung ausgeschleust werden. In diesem Standardmodus wird das gegebenenfalls erfolgende Betreten des Sicherheitsbereichs durch eine Person von der Schutzeinrichtung detektiert, wobei die Steuereinrichtung im Ansprechen darauf den Stillstand der Bearbeitungsvorrichtung veranlasst.

Erfindungsgemäß werden bei diesem Verfahren weiter folgende Schritte ausgeführt:
i) automatisches oder manuelles Umschalten der Vorrichtung in einen Sondermodus, in welchem die Steuereinrichtung das Betreten des Sicherheitsbereichs durch eine Person ohne automatischen Stillstand der Bearbeitungsvorrichtung ermöglicht,
ii) Erkennen und Zuführen eines Werkstücks zur Bearbeitungsvorrichtung und Eintreten einer Person in den Sicherheitsbereich,
iii) Bearbeiten des Werkstücks.

Dabei kann vorgesehen sein, dass nach erfolgter Bearbeitung des Werkstücks die Vorrichtung automatisch in den Standardmodus umgeschaltet wird, sobald die Schutzeinrichtung das Austreten der Person aus dem Sicherheitsbereich detektiert. So kann sichergestellt werden, dass das Betreten des Sicherheitsbereichs tatsächlich nur dann erfolgt, wenn die Präsenz einer Person im Sicherheitsbereich zwingend erforderlich ist. Befindet sich also keine Person (mehr) im Sicherheitsbereich, soll der Standardbetrieb der Vorrichtung fortgesetzt werden.

Bevorzugt ist ferner, dass der Sondermodus nur für einzelne Werkstücke ermöglichen soll, dass der Sicherheitsbereich betreten werden kann. Bevor also ein weiteres Werkstück in die Bearbeitungsvorrichtung gelangt, soll die im Sicherheitsbereich befindliche Person diesen erst wieder verlassen. So wird die Vorrichtung bevorzugt automatisch in den Stillstand versetzt, falls über eine Werkstückerkennungseinrichtung ein weiteres Werkstück vor Eintritt in die Bearbeitungsvorrichtung erkannt wird und die Person den Sicherheitsbereich noch nicht verlassen hat. Auch dies erhöht die Sicherheit und reduziert die Anwesenheit einer Person im Sicherheitsbereich auf ein Minimum.

Je nach Sensoreinrichtung müssen deren Signale ausgewertet und an die Steuereinrichtung der erfindungsgemäßen Vorrichtung weitergeleitet werden. Bevorzugt ist vorgesehen, dass das Betreten des Sicherheitsbereichs durch eine Person dadurch detektiert wird, dass zunächst die von dem Sicherheitsbereich abgewandte zweite Sensoreinrichtung und zeitlich nachfolgend die dem Sicherheitsbereich zugewandte erste Sensoreinrichtung bei Durchschreiten der Schutzeinrichtung durch die Person angesprochen werden. Wie oben erwähnt, kann durch diesen zeitlichen Versatz der Auslösung der beiden Sensoreinrichtungen und der daraufhin zeitlich versetzten an die Steuereinrichtung übermittelten Signale darauf geschlossen werden, in welcher Richtung die Sicherheitseinrichtung durchschritten wird, je nachdem, welche bder Sicherheitseinrichtungen zuerst angesprochen wird.

Entsprechend kann das Austreten der Person aus dem Sicherheitsbereich dadurch detektiert werden, dass zunächst die dem Sicherheitsbereich zugewandte erste Sensoreinrichtung und zeitlich nachfolgend die von dem Sicherheitsbereich abgewandte zweite Sensoreinrichtung bei Durchschreiten der Schutzeinrichtung durch die Person angesprochen werden.

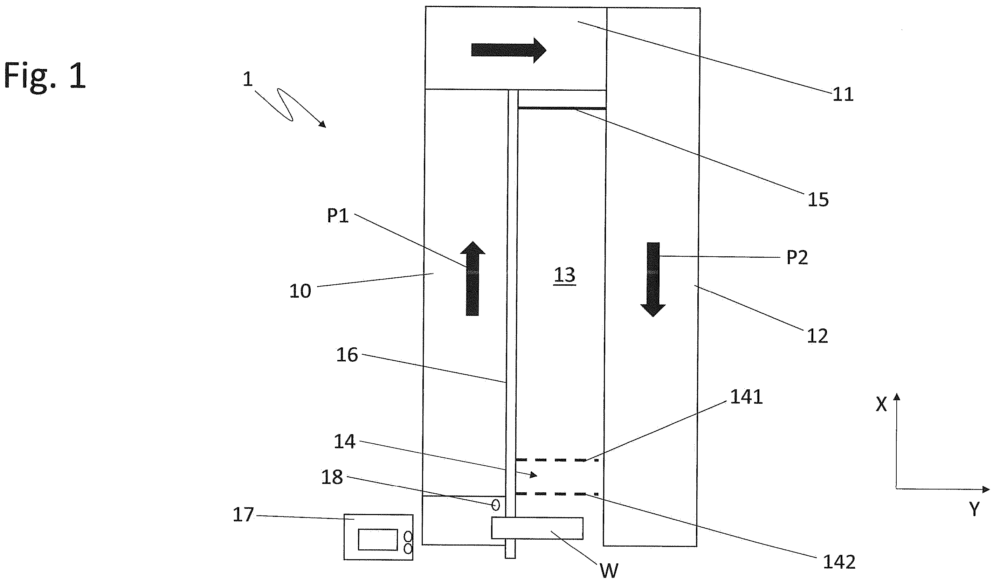

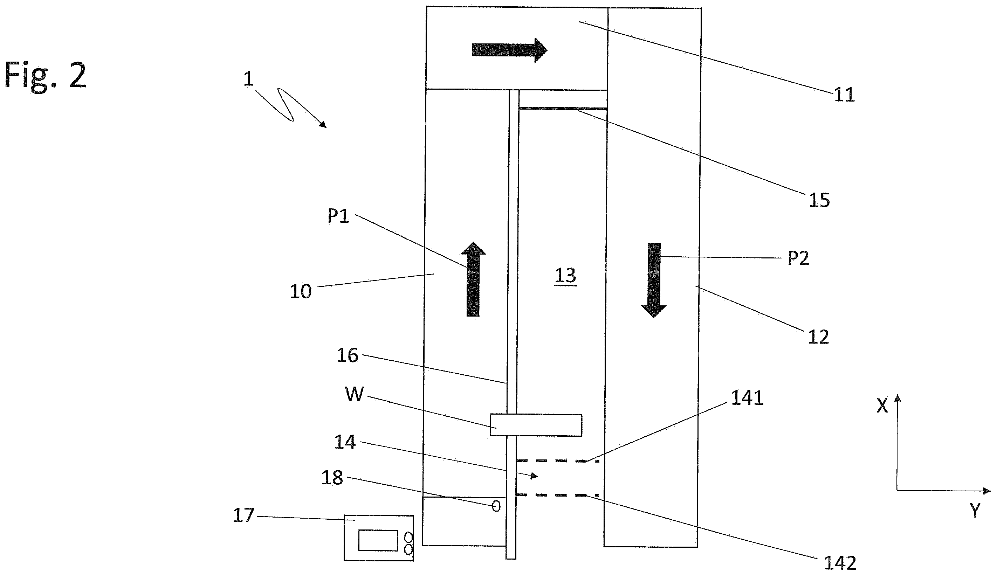

Die Erfindung wird nachfolgend anhand der Figuren 1 und 2 näher erläutert.
Figur 1 zeigt eine schematische Draufsicht auf eine beispielhafte erfindungsgemäße Vorrichtung in einer ersten Situation mit dem Werkstück außerhalb der Bearbeitungsvorrichtung.
Figur 2 zeigt die in Figur 1 dargestellte Vorrichtung in einer zweiten Situation mit dem Werkstück innerhalb der Bearbeitungsvorrichtung.

Im gezeigten Beispiel weist die erfindungsgemäße Vorrichtung 1 eine Bearbeitungsvorrichtung 10 auf, die bevorzugt eine Kantenbearbeitungsvorrichtung sein kann, genauso können aber auch andere Bearbeitungsschritte in der Bearbeitungsvorrichtung 10 vorgenommen werden. Durch diese Bearbeitungsvorrichtung 10 wird im Durchlaufverfahren ein Werkstück W in Richtung des Pfeils P1 parallel zur Richtung X über eine Fördervorrichtung 16, beispielsweise eine Kettenbahn, bewegt. In Pfeilrichtung P1 hinter der Bearbeitungsvorrichtung 10 befindet sich eine Rückführstrecke 11, 12, im gezeigten Beispiel erfolgt die Rückführung zunächst senkrecht zur Richtung X in einer Querrichtung Y im Abschnitt 11 der Rückführstrecke, sodann entgegengesetzt zur Förderrichtung P1 in der Bearbeitungsvorrichtung 10 parallel zur Richtung X in Richtung des Pfeils P2. Zwischen der Bearbeitungsvorrichtung 10 und der Rückführstrecke 12 befindet sich ein Sicherheitsbereich 13, der in einem Standardmodus der erfindungsgemäßen Vorrichtung nicht betreten werden kann. Zur Detektion des Betretens des Sicherheitsbereichs 13 dient eine Schutzeinrichtung 14, welche erfindungsgemäß zwei voneinander in Richtung X beabstandete Sensoreinrichtungen 141 - dem Sicherheitsbereich zugewandt - und 142 - dem Außenbereich zugewandt - aufweist. Tritt im Standardmodus der erfindungsgemäßen Vorrichtung 1 eine Person in den Sicherheitsbereich 13 ein, so detektiert die Schutzeinrichtung 14 dies und leitet ein Eintrittserkennungssignal an die Steuereinrichtung weiter, die daraufhin veranlasst, dass die Bearbeitungsvorrichtung 10 oder die gesamte Vorrichtung 1 abgeschaltet wird.

17 bezeichnet ein Bedienpult, an welchem eine Person die Vorrichtung 1 bedienen kann. Beispielsweise können dort Steuerprogramme aufgerufen werden, die dann in die nicht dargestellte Steuereinrichtung der Maschine hochgeladen werden oder es können andere Manipulationen durchgeführt werden, beispielsweise das Umschalten der erfindungsgemäßen Vorrichtung aus dem Standardmodus in einen Sondermodus.

Das Bezugszeichen 18 bezeichnet eine Werkstückerkennungseinrichtung, die der Steuereinrichtung der Vorrichtung 1 anzeigt, ob ein Werkstück W in die Bearbeitungsvorrichtung 10 eingeschoben wird. Im Standardmodus werden Werkstücke W nacheinander in die Bearbeitungsvorrichtung 10 eingebracht und dort bearbeitet und anschließend über die Rückführstrecke 11, 12 entweder erneut in die Bearbeitungsvorrichtung 10 eingeführt, um einen weiteren Bearbeitungsschritt zu durchlaufen, oder anderweitig ausgeschleust.

Bei einigen Werkstücken W kann es, wie im gezeigten Beispiel dargestellt, vorkommen, dass diese beispielsweise ihrer Länge nach stark über die Fördervorrichtung 16 überhängen und beim Durchlaufen der Bearbeitungsvorrichtung 10 ein ganzes Stück in den Sicherheitsbereich 13 hineinragen. Bei solchen Werkstücken ist es erforderlich, dass eine Person diese beim Weg durch die Bearbeitungsvorrichtung 10 manuell unterstützt.

Wird ein solches Teil entweder von der Steuereinrichtung oder von der die Vorrichtung 1 bedienenden Person erkannt, so wird die Vorrichtung 1 entweder automatisch durch die Steuereinrichtung oder durch die Person - zum Beispiel über das Bedienpult 17 - in den Sondermodus umgeschaltet. In diesem Sondermodus ist es möglich, dass eine Person in den Sicherheitsbereich 13 eintritt. Falls sich während der Anwesenheit der Person im Sicherheitsbereich 13 Komplikationen oder Gefahrensituationen ergeben sollten, steht innerhalb des Sicherheitsbereichs eine Abschalteinrichtung 15 zur Verfügung, die die Bearbeitungsvorrichtung 10 bzw. die Vorrichtung 1 allgemein bei Bedienung abschaltet. Betritt im Sondermodus eine Person den Sicherheitsbereich 13, so wird dies zunächst von der außen liegenden Sensoreinrichtung 142 erfasst und zeitlich danach von der Sensoreinrichtung 141. Die Steuereinrichtung erkennt aus dieser zeitlichen Abfolge, dass eine Bewegung einer Person von außen in den Sicherheitsbereich hinein erfolgt ist. Würde die zeitliche Abfolge der Signale der beiden Sensoreinrichtungen in umgekehrter Reihenfolge erfolgen, würde der Steuereinrichtung dadurch angezeigt, dass eine im Sicherheitsbereich 13 befindliche Person den Sicherheitsbereich verlassen hat.

Wie in Figur 2 dargestellt, wird das Werkstück W, welches ein gutes Stück über die Fördervorrichtung 16 hinaus in den Sicherheitsbereich 13 hineinragt und dort von der Person unterstützt wird, dann weiter in Pfeilrichtung P1 parallel zur Richtung X bewegt und von der Bearbeitungsvorrichtung 10 bearbeitet, beispielsweise mit einem Kantenband versehen. Die im Sicherheitsbereich 13 unterstützende Person führt das Werkstück W bis zum Ende der Bearbeitungsvorrichtung und gegebenenfalls auch noch bei der Rückführung über die Rückführstrecke 11, 12 mit. Ist eine Unterstützung nicht mehr erforderlich, kann die Person den Sicherheitsbereich 13 verlassen.

Die Werkstückerkennungseinrichtung 18 erkennt, ob zwischenzeitlich ein weiteres Werkstück zur Aufgabe in die Bearbeitungsvorrichtung 10 vorhanden ist. Bevorzugt wird dieses Werkstück so lange nicht in die Bearbeitungsvorrichtung 10 eingebracht, bis die Person den Sicherheitsbereich 13 verlassen hat. Es kann vorgesehen sein, dass in dem Moment, in dem die Sensoreinrichtungen 141 und zeitlich danach 142 anzeigen, dass die Person den Sicherheitsbereich 13 verlassen hat, die Steuereinrichtung der Vorrichtung 1 automatisch wieder in den Standardmodus umschaltet.

## Patentansprüche

1. Vorrichtung (1) zum Bearbeiten von, insbesondere plattenförmigen, Werkstücken (W) aus Holz oder Holzersatzstoffen, mit
einer im Durchlauf betriebenen Bearbeitungsvorrichtung (10), welche wenigstens ein Bearbeitungsaggregat und eine Fördervorrichtung (16) aufweist, die die Werkstücke (W) in einer ersten Förderrichtung (P1) durch die Bearbeitungsvorrichtung (10) bewegt,
einer Rückführstrecke (11, 12), die die durch die Bearbeitungsvorrichtung (10) bewegten Werkstücke (W) in wenigstens einer zweiten Förderrichtung (P2) bewegt, wobei die zweite Förderrichtung (P2) insbesondere wenigstens abschnittweise entgegengesetzt zur ersten Förderrichtung (P1) verläuft,
einem von der Bearbeitungsvorrichtung (10) und der Rückführstrecke (11, 12) umgebenen Sicherheitsbereich (13),
**dadurch gekennzeichnet,**
**dass** der Sicherheitsbereich (13) im Bereich eines Eingangs desselben über eine Schutzeinrichtung (14) verfügt, die so angeordnet und ausgelegt ist, dass sie das Eintreten einer Person in den Sicherheitsbereich (13) erkennt und an eine Steuereinrichtung der Vorrichtung (1) ein entsprechendes Eintrittserkennungssignal übermittelt,
wobei die Schutzeinrichtung (14) eine erste Sensoreinrichtung (142) und eine davon in einer ersten Förderrichtung (P1) beabstandet angeordnete zweite Sensoreinrichtung (141) umfasst.

2. Vorrichtung (1) nach Anspruch 1,
**dadurch gekennzeichnet,**
**dass** die erste und/oder die zweite Sensoreinrichtung (141, 142) eine nicht trennende Schutzeinrichtung umfasst, die aus folgender Gruppe ausgewählt ist: berührungslos wirkende Schutzeinrichtung, Lichtvorhang, Trittmatte, druckempfindliche Schutzeinrichtung, Kontaktleiste, Kontaktmatte, Schaltleiste, Schaltmatte, Sicherheitsleiste.

3. Vorrichtung (1) nach einem der vorigen Ansprüche, **dadurch gekennzeichnet,**
**dass** sie eine Werkstückerkennungseinrichtung (18) aufweist, die ein in die Bearbeitungsvorrichtung (10) einlaufendes Werkstück erfasst.

4. Vorrichtung (1) nach einem der vorigen Ansprüche, **dadurch gekennzeichnet,**
**dass** sie über eine Umschalteinrichtung (17) verfügt, die dazu ausgelegt ist, die Vorrichtung zwischen einem Standardmodus, in welchem das Betreten des Sicherheitsbereichs (13) durch eine Person automatisch zum Stillstand der Bearbeitungsvorrichtung (10) führt, und einem Sondermodus umzuschalten, in welchem das Betreten des Sicherheitsbereichs (13) durch eine Person ohne automatischen Stillstand der Bearbeitungsvorrichtung (10) ermöglicht ist.

5. Vorrichtung (1) nach einem der vorigen Ansprüche, **dadurch gekennzeichnet,**
**dass** sie eine Abschalteinrichtung (15) zum Abschalten der Vorrichtung (1) aufweist, die vom Sicherheitsbereich (13) aus für eine sich darin aufhaltende Person erreichbar ist.

6. Verfahren zum Betrieb einer Vorrichtung (1) nach einem der vorigen Ansprüche, bei welchem die Vorrichtung (1) in einem Standardmodus betrieben wird, in welchem Werkstücke (W) nacheinander über die Fördervorrichtung (16) in die Bearbeitungsvorrichtung (10) eingefördert, dort bearbeitet und über die Rückführstrecke (11, 12) zurückgeführt oder/und aus der Vorrichtung nach der durch die Bearbeitungsvorrichtung (10) erfolgte Bearbeitung ausgeschleust werden, und in welchem das gegebenenfalls erfolgende Betreten des Sicherheitsbereichs (13) durch eine Person von der Schutzeinrichtung (141, 142) detektiert wird und die Steuereinrichtung im Ansprechen darauf den Stillstand der Bearbeitungsvorrichtung (10) veranlasst, **gekennzeichnet durch** folgende Schritte:
i) automatisches oder manuelles Umschalten der Vorrichtung (1) in einen Sondermodus, in welchem die Steuereinrichtung das Betreten des Sicherheitsbereichs (13) durch eine Person ohne automatischen Stillstand der Bearbeitungsvorrichtung (10) ermöglicht,
ii) Erkennen und Zuführen eines Werkstücks (W) zur Bearbeitungsvorrichtung (10) und Eintreten einer Person in den Sicherheitsbereich (13),
iii) Bearbeiten des Werkstücks (W).

7. Verfahren nach Anspruch 6,
**dadurch gekennzeichnet,**
**dass** nach erfolgter Bearbeitung des Werkstücks (W) die Vorrichtung automatisch in den Standardmodus umgeschaltet wird, sobald die Schutzeinrichtung (14) das Austreten der Person aus dem Sicherheitsbereich (13) detektiert.

8. Verfahren nach einem der Ansprüche 6 oder 7,
**dadurch gekennzeichnet,**
**dass** die Vorrichtung (1) automatisch in den Stillstand versetzt wird, falls über eine Werkstückerkennungseinrichtung (18) ein weiteres Werkstück (W) vor Eintritt in die Bearbeitungsvorrichtung (18) erkannt wird und die Person den Sicherheitsbereich (13) noch nicht verlassen hat.

9. Verfahren nach einem der Ansprüche 6 bis 8,
**dadurch gekennzeichnet,**
**dass** das Betreten des Sicherheitsbereiches (13) durch eine Person dadurch detektiert wird, dass zunächst die von dem Sicherheitsbereich (13) abgewandte zweite Sensoreinrichtung (142) und zeitlich nachfolgend die dem Sicherheitsbereich (13) zugewandte erste Sensoreinrichtung (141) bei Durchschreiten der Schutzeinrichtung (14) durch die Person angesprochen werden.

10. Verfahren nach einem der Ansprüche 6 bis 9,
**dadurch gekennzeichnet,**
**dass** das Austreten der Person aus dem Sicherheitsbereich (13) dadurch detektiert wird, dass zunächst die dem Sicherheitsbereich (13) zugewandte erste Sensoreinrichtung (141) und zeitlich nachfolgend die von dem Sicherheitsbereich (13) abgewandte zweite Sensoreinrichtung (142) bei Durchschreiten der Schutzeinrichtung (14) durch die Person angesprochen werden.

## Claims

1. Device (1) for machining, in particular panel-shaped, workpieces (W) made of wood or wood substitutes, with a continuously operated machining device (10) which has at least one machining assembly and a conveyor device (16) which moves the workpieces (W) in a first conveying direction (P1) through the machining device (10), a return stretch (11, 12) which moves the workpieces (W) which have moved through the machining device (10) back in at least a second conveying direction (P2) wherein the second conveying direction (P2) runs in particular in at least some sections opposite to the first conveying direction (P1), a safety region (13) surrounded by the machining device (10) and the return stretch (11, 12)
**characterised in that**
the safety region (13) has in the input area thereof a protection unit (14) which is arranged and configured so that it detects the entrance of a person into the safety region (13) and sends a corresponding entry detection signal to a control unit of the device (1) wherein the protection unit (14) comprises a first sensor unit (142) and a second sensor unit (141) arranged at a distance therefrom in a first conveying direction (P1).

2. Device (1) according to Claim 1
**characterised in that**
the first and/or the second sensor unit (141, 142) comprises a non-separating protection unit which is selected from the following group: a contactlessly operating protection unit, light mat, pressure-sensitive protection unit, contact strip, contact mat, switch strip, switch mat, security strip.

3. Device (1) according to one of the preceding claims
**characterised in that**
it has a workpiece detection unit (18) which detects a workpiece entering into the machining device (10).

4. Device (1) according to one of the preceding claims
**characterised in that**
it has a switching unit (17) which is configured to switch the device between a standard mode, in which the entrance of a person into the safety region (13) automatically leads to the stoppage of the machining device (10), and a special second mode, in which the entrance of a person into the safety region (13) is possible without an automatic stoppage of the machining device (10).

5. Device (1) according to one of the preceding claims
**characterised in that** it has a shutdown system (15) for switching off the device (1), which can be reached from the safety region (13) by a person stopping therein.

6. Method for operating a device (1) according to one of the preceding claims, in which the device (1) is operated in a standard mode in which workpieces (W) are fed in succession into the machining device (10) via the conveyor device (16), machined there and returned via the return stretch (11, 12) and/or are ejected from the device after machining has taken place by the machining device (10), and in which the entrance which may occur of a person into the safety region (13) is detected by the protection unit (141, 142) and the control device in response thereto causes the machining device (10) to stop, **characterised by** the following steps:
i) automatic or manual switching of the device (1) into a special second mode in which the control unit allows a person to enter the safety region (13) without an automatic stoppage of the machining device (10);
ii) detecting and supplying a workpiece (W) to the machining device (10) and a person entering into the safety region (13),
iii) machining the workpiece (W).

7. Method according to Claim 6
**characterised in that**
after the workpiece (W) has been machined the device is automatically switched over into standard mode as soon as the protection device (14) detects the exit of the person from the safety region (13).

8. Method according to one of Claims 6 or 7
**characterised in that**
the device (1) is automatically set to standstill if a further workpiece (W) is detected by a workpiece detection unit (18) before entering into the machining device (18) and the person has not yet left the safety region (13).

9. Method according to one of Claims 6 to 8
**characterised in that**
the entrance of a person into the safety region (13) is detected when first the second sensor unit (142) facing away from the safety region (13), and then the first sensor unit (141) facing the safety area (13) are addressed by the person passing through the protection unit (14).

10. Method according to one of Claims 6 to 9
**characterised in that**
the exit of the person from the safety region (13) is detected when first the first sensor unit (141) facing the safety region (13) and then the second sensor unit (142) facing away from the safety region (13) are addressed by the person passing through the protection unit (14).

## Revendications

1. Dispositif (1) pour traiter des pièces (W), surtout en forme de plaques, en bois ou des matériaux de substitution du bois, comportant
un dispositif de traitement (10) fonctionnant en continu comprenant au moins une unité de traitement et un dispositif de transport (16) transportant les pièces (W) dans une première direction de transport (P1) à travers le dispositif de traitement (10),
un trajet de retour (11, 12) transportant les pièces (W) transportées à travers le dispositif de traitement (10) dans au moins une deuxième direction de transport (P2), dans lequel la deuxième direction de transport (P2) est notamment opposée à la première direction de transport (P1), au moins par sections,
une zone de sécurité (13) entourée par le dispositif de traitement (10) et le trajet de retour (11, 12),
**caractérisé en ce**
**que** la zone de sécurité (13) est équipée, au niveau d'une entrée de la zone de sécurité (13), d'un dispositif de protection (14), qui est disposé et conçu de manière à détecter l'entrée d'une personne dans la zone de sécurité (13) et à transmettre un signal de détection d'entrée correspondant à un moyen de commande du dispositif (1),
dans lequel le dispositif de protection (14) comporte un premier dispositif de détecteur (142) et un deuxième dispositif de détecteur (141) agencé de manière espacée du premier dispositif de détecteur (142) dans une première direction de transport (P1).

2. Dispositif (1) selon la revendication 1,
**caractérisé en ce**
**que** le premier dispositif de détecteur et/ou le deuxième dispositif de détecteur (141,142) comporte un dispositif de protection non séparateur choisi parmi le groupe suivant: un dispositif de protection sans contact, un rideau lumineux, un tapis sensible, un dispositif de protection sensible à la pression, une barre de contact, un tapis de contact, une barre palpeuse de sécurité, un tapis de sécurité, une barre de sécurité.

3. Dispositif (1) selon l'une quelconque des revendications précédentes,
**caractérisé en ce**
**qu'**il comporte un dispositif de détection de pièce (18) qui détecte une pièce entrant dans le dispositif de traitement (10).

4. Dispositif (1) selon l'une quelconque des revendications précédentes,
**caractérisé en ce**
**qu'**il dispose d'un dispositif de commutation (17) conçu pour faire passer le dispositif d'un mode standard, dans lequel l'entrée d'une personne dans la zone de sécurité (13) entraîne automatiquement l'arrêt du dispositif de traitement (10), à un mode spécial, dans lequel l'entrée d'une personne dans la zone de sécurité (13) est possible sans arrêt automatique du dispositif de traitement (10).

5. Dispositif (1) selon l'une quelconque des revendications précédentes,
**caractérisé en ce**
**qu'**il comprend un dispositif d'arrêt (15) permettant d'arrêter le dispositif (1) accessible depuis la zone de sécurité (13) pour une personne qui s'y trouve.

6. Procédé pour faire fonctionner un dispositif (1) selon l'une quelconque des revendications précédentes, dans lequel le dispositif (1) fonctionne en mode standard, dans lequel des pièces (W) sont acheminées les unes après les autres dans le dispositif de traitement (10) via le dispositif de transport (16), y sont traitées et renvoyées via le trajet de retour (11, 12) ou/et évacuées du dispositif après le traitement effectué par le dispositif de traitement (10), et dans lequel, le cas échéant, l'entrée d'une personne dans la zone de sécurité (13) est détectée par le dispositif de protection (14) et le moyen de commande provoque l'arrêt du dispositif de traitement (10) en réponse à cela,
**caractérisé par** les étapes suivantes:
i) commutation automatique ou manuelle du dispositif (1) dans un mode spécial dans lequel le moyen de commande autorise l'accès à la zone de sécurité (13) par une personne sans arrêt automatique du dispositif de traitement (10),
ii) détection et acheminement d'une pièce (W) vers le dispositif de traitement (10) et entrée d'une personne dans la zone de sécurité (13),
iii) traitement de la pièces (W).

7. Procédé selon la revendication 6,
**caractérisé en ce**
**qu'**après le traitement de la pièce (W), le dispositif passe automatiquement en mode standard dès que le dispositif de protection (14) détecte que la personne a quitté la zone de sécurité (13).

8. Procédé selon l'une quelconque des revendications 6 ou 7,
**caractérisé en ce**
**que** le dispositif (1) est automatiquement mis à l'arrêt si un dispositif de détection de pièce (18) détecte une autre pièce (W) avant qu'elle n'entre dans le dispositif de traitement (18) et que la personne n'a pas encore quitté la zone de sécurité (13).

9. Procédé selon l'une quelconque des revendications 6 à 8,
**caractérisé en ce**
**que** l'entrée de la zone de sécurité (13) par une personne est détectée par le fait que le deuxième dispositif de détecteur (142) détourné de la zone de sécurité (13) est d'abord activé, et ultérieurement le premier dispositif de détecteur (141) tourné vers la zone de sécurité (13) est activé lorsque la personne franchit le dispositif de protection (14).

10. Procédé selon l'une quelconque des revendications 6 à 9,
**caractérisé en ce**
**que** la sortie de la personne de la zone de sécurité (13) est détectée par le fait que le premier dispositif de détecteur (141) tourné vers la zone de sécurité (13) est d'abord activé et ultérieurement le deuxième dispositif de détecteur (142) détourné de la zone de sécurité (13) est activé lorsque la personne franchit le dispositif de protection (14).
